# EUROPEAN PATENT APPLICATION

(11) **EP 4 230 098 A2**
(43) Date of publication of application: **23.08.2023**
(21) Application number: 22208220.8
(22) Date of filing: 18.11.2022
(51) Int. Cl.: A47J 36/06, A47J 36/10

(54) **A FOOD PROCESSING APPARATUS AS WELL AS ITS CONTAINER COVER AND ITS CONTAINER**

(30) Priority: 17.02.2022 CN 202220318597 U; 17.02.2022 CN 202220318172 U
(71) Applicant: Alpha Home Group Limited, 999077 Hong Kong (HK)
(72) Inventor: Chow, Jesse, Hong Kong, 999077 (CN)
(74) Representative: Wang, Bo

(57) **Abstract**

The present utility model relates to the technical field of food processing apparatuses, in particular relates to a food processing apparatus as well as its container cover and its container, comprising a cover assembly; the cover assembly comprises a cover body, a plurality of holding pieces and an operating piece; the cover body is arranged with a stirring shaft opening through the cover body; the holding pieces are connected with the cover body in a linearly sliding manner and have a tendency to approach the stirring shaft opening on the horizontal plane; a holding piece comprises a holding part which can be inserted into the stirring shaft opening; the operating piece is movably connected with the cover body, and the movability of the operating piece relative to the cover body has a vector along the stirring shaft opening; at least one kind of the holding pieces and the operating piece is arranged with a supporting slope wherein the holding pieces are located on the movable path of the operating piece and the operating piece can abut the holding pieces to keep the holding piece away from the stirring shaft opening. The present utility model can realize the release of the processing knife by pressing the operating piece, which is safe and convenient to move the operating piece.

## Description

### TECHNICAL FIELD

The present utility model relates to the technical field of food processing apparatuses, in particular relates to a food processing apparatus as well as its container cover and its container.

### BACKGROUND ART

The container cover of the prior art comprises a cover body, a plurality of holding pieces and an operating piece, wherein the operating piece is hinged with the cover body (21) to rotate around the shaft axis of the cup body.

The holding pieces are arranged with a cylinder, the operating piece is arranged with a chute and the cylinder of the holding pieces is embedded into the chute of the operating piece. The operating piece is rotated around the shaft axis of the cup body so that the cylinder moves in the chute and thus makes the holding pieces approach or leave the stirring shaft opening.

To sum up, the prior art has the following technical problems at least,

First, when the operating piece is rotated, the operating piece may drive the cover body to rotate; therefore, it is necessary to fix the cover body rotatablely with the cup body. In addition to inconvenient operations, it is also necessary to install a rotating and fixing structure between the cover body and the cup body.

### SUMMARY OF UTILITY MODEL

One purpose of the present utility model is to solve or alleviate the first technical problem described above.

As a technical solution, the present utility model uses a container cover for a food processing apparatus comprising a cover assembly, wherein the cover assembly comprises a cover body, a plurality of holding pieces and an operating piece; the cover body is arranged with a stirring shaft opening through the cover body; the holding pieces are connected with the cover body in a linearly sliding manner and have a tendency to approach the stirring shaft opening on the horizontal plane; a holding piece comprises a holding part which can be inserted into the stirring shaft opening; the operating piece is movably connected with the cover body, and the movability of the operating piece relative to the cover body has a vector along the stirring shaft opening; at least one kind of the holding pieces and the operating piece is arranged with a supporting slope wherein the holding pieces are located on the movable path of the operating piece and the operating piece can abut the holding pieces to keep the holding piece away from the stirring shaft opening.

The present utility model has the effect that it can realize the release of the processing knife by pressing the operating piece, which is safe and convenient to move the operating piece.

As a further technical solution, the cover assembly also comprises a plurality of resilient pieces, and there is a plurality of holding pieces which are arranged around the stirring shaft opening, and the resilient pieces are respectively connected with different holding pieces.

They can ensure that the holding forces of the holding pieces on the holding groove of the after-mentioned processing knife are equal.

As a further technical solution, the operating piece comprises an operating part, and in natural state, the operating part is provided with the highest point of the cover assembly.

It is convenient to release the processing knife by not manually operating the operating piece.

As a further technical solution, the operating piece comprises a connecting shaft, and the part of the operating piece that abuts the holding pieces is located between the connecting shaft and the operating part.

When the operating part is butted by the host, the operating piece can provide a great force to hold the holding pieces to ensure smooth movement of the holding pieces and high reliability.

As a further technical solution, the holding part is arranged with a knife bevel.

It is convenient for mounting the processing knife onto the cover assembly.

As a further technical solution, the holding pieces are symmetrical with respect to the operating piece.

As a further technical solution, the cover body is arranged with a protrusion, and the stirring shaft opening passes through the protrusion, the holding pieces abut the protrusion, the side wall of the protrusion is arranged with a yielding opening, and the holding part can pass through the yielding opening.

It can limit the distance among the holding pieces and is convenient for mounting the processing knife onto the cover assembly.

As a further technical solution, it also comprises a hood that covers the holding pieces.

As a further technical solution, the cover body is arranged with a plurality of guide rails, wherein the holding pieces are arranged with a plurality of guide grooves and the guide rails are embedded into the guide grooves.

Another purpose of the utility model is that the cup body with any different function can be conveniently connected with the host through the cover body.

A container of a food processing apparatus comprises a cover assembly and a cup body, wherein the cover assembly comprises a plurality of holding pieces and a cover body arranged with a stirring shaft opening; the holding pieces are connected with the cover body and can hold the processing knife; the top of the cover body is fixedly arranged with an annular extension body coaxial with the stirring shaft opening, and the inner wall of the extension body is fixedly arranged with an L-shaped host connection body; the bottom of the cover body is fixedly arranged with a cup connecting body, and the cup body is arranged with a connected body; the cup connecting body and the connected body abut each other to limit their mutual distance along the shaft axis of the stirring shaft opening and make the cover body and the cup body connected detachably.

As a further technical solution, it also comprises an insurance triggering piece arranged with a triggering top, wherein the insurance triggering piece is arranged onto the cover body and the triggering top can protrude from the top of the cover body.

It is safe to ensure that the stirring shaft can rotate only when the container assembly is mounted onto the host.

As a further technical solution, the cover body is arranged with a linear chute, and the insurance triggering piece is inserted into the linear chute so that the insurance triggering piece is connected with the cover body in a linearly sliding manner and the triggering top can go up and down relatively to the cover body.

It can ensure that the insurance triggering piece is with the cover body in a linearly sliding manner.

As a further technical solution, the insurance triggering piece is arranged with an anti-falling resilient arm that extends outwards, and the anti-falling resilient arm butts the inner side of the linear chute.

The lifting of the insurance triggering piece has a damping effect and thus makes it difficult for the insurance triggering piece to fall off from the cover body.

As a further technical solution, the cover body and the cup body are connected rotatablely and detachably, the cover body is arranged with a safety lifting body, wherein the safety lifting body comprises a higher section and a lower section, and the bottom of the insurance triggering piece butts the higher section when the cover body and the cup body are closed.

It is convenient that the triggering top does not interfere with the use.

As a further technical solution, the extension body is arranged with a locking groove and an unlocking and yielding groove.

As a further technical solution, the cup body is arranged with an ice shaving device and/or an external cup cover.

A food processing apparatus comprises a container described above, and it also comprises a processing knife and is arranged with a stirring shaft which can rotate and lift, wherein the bottom of the stirring shaft is a spiral spline, the processing knife is arranged with a holding groove and a connecting part just facing the stirring shaft opening; the processing knife is also arranged with a plurality of knife wings or a knife disc with top cones; the holding pieces hold the processing knife; the cover assembly also comprises an operating piece for controlling the holding pieces; the host is arranged with an L-shaped cover connecting protrusion, the cover body rotates relatively to the host so that the host abuts the operating piece and further controls the holding pieces to unlock the processing knife when the host connecting body and the cover connecting protrusion abut each other and are connected.

As a further technical solution, the extension body is arranged with a locking groove and an unlocking and yielding groove; the host is arranged with a locking protrusion and an unlocking button that can lock the protrusion to lift, and the locking protrusion is inserted into the locking groove to prevent the cover body from rotating relatively to the host.

The container assembly can be locked and unlocked conveniently.

As a further technical solution, it also comprises an insurance triggering piece arranged with a triggering top, wherein the insurance triggering piece is arranged onto the cover body, the triggering top can protrude from the top of the cover body, the host is arranged with an arc yielding groove, the host is arranged with an electrical signal device inside, the cover body rotates relatively to the host so that the triggering top triggers the electrical signal device enables the host to operate after the host connecting body and the cover connecting protrusion abut each other and are connected.

It is safe that the host can operate only after the container assembly is mounted in place.

To sum up, the present utility model can achieve the following technical effects:
(1) The present utility model can realize the release of the processing knife by pressing the operating piece, which is safe and convenient to move the operating piece.
(2) When the operating part is butted by the host, the operating piece can provide a great force to hold the holding pieces to ensure smooth movement of the holding pieces and high reliability.
(3) They can ensure that the holding forces of the holding pieces on the holding groove of the after-mentioned processing knife are equal.
(4) The cup body with any different function can be conveniently connected with the host through the cover body.
(5) It is safe to ensure that the stirring shaft can rotate only when the container assembly is mounted onto the host.
(6) It is safe that the host can operate only after the container assembly is mounted in place.

### BRIEF DESCRIPTION OF DRAWINGS

FIG. 1 is a three-dimensional schematic diagram of the food processing apparatus in Embodiment I of the present utility model.
FIG. 2 is a three-dimensional exploded and schematic diagram of the container of a food processing apparatus in Embodiment I of the present utility model.
FIG. 3 is a three-dimensional exploded and schematic diagram of the cover assembly (2) in Embodiment I of the present utility model.
FIG. 4 is a three-dimensional exploded and schematic diagram of the cover assembly (2) in Embodiment I of the present utility model.
FIG. 5 is a three-dimensional schematic diagram of the cover assembly (2) in Embodiment I of the present utility model, wherein the hood (29) is not drawn.
FIG. 6 is a three-dimensional exploded and schematic diagram of the cover assembly (2) in Embodiment I of the present utility model.
FIG. 7 is a three-dimensional exploded and schematic diagram of the cover assembly (2) in Embodiment I of the present utility model.
FIG. 8 is a top view of the cover assembly (2) in Embodiment I of the present utility model.
FIG. 9 is a partially schematic diagram of Section 1 in **FIG. 8**; Arrow 1 indicates that the general direction in which the operating piece (24) moves downwards after the operating part (242) is pressed; Arrow 2 indicates that the general direction in which the operating piece (24) leaves the connecting part (81) after the operating piece (24) is abutted.
FIG. 10 is a partially schematic diagram of Section 2 in **FIG 8**; Arrow 3 indicates that the general direction in which the cover assembly (2) moves upwards as the lifting platform (92) moves; Line 1 indicates that the imagining edge of the part above the container assembly (1) of the host (9).
FIG. 11 is a three-dimensional schematic diagram of the food processing apparatus in Embodiment II of the present utility model.
FIG. 12 is a three-dimensional schematic diagram of the food processing apparatus in Embodiment II of the present utility model.
FIG. 13 is a three-dimensional schematic diagram of the food processing apparatus in Embodiment II of the present utility model, wherein the food receiving plate is not drawn.
FIG. 14 is a three-dimensional schematic diagram of the food processing apparatus in Embodiment II of the present utility model, wherein the food receiving plate is not drawn.
FIG. 15 is a schematic diagram of Section 2 in **FIG. 14****.**
FIG. 16 is a vertically schematic diagram of the container assembly (1) in Embodiment II of the present utility model.
FIG. 17 is a top view of the container assembly (1) in Embodiment II of the present utility model.
FIG. 18 is a three-dimensional exploded and schematic diagram of the container assembly (1) in Embodiment II of the present utility model.
FIG. 19 is a three-dimensional exploded and schematic diagram of the container assembly (1) in Embodiment II of the present utility model.
FIG. 20 is a schematic diagram of Section 3 in **FIG. 17****.**

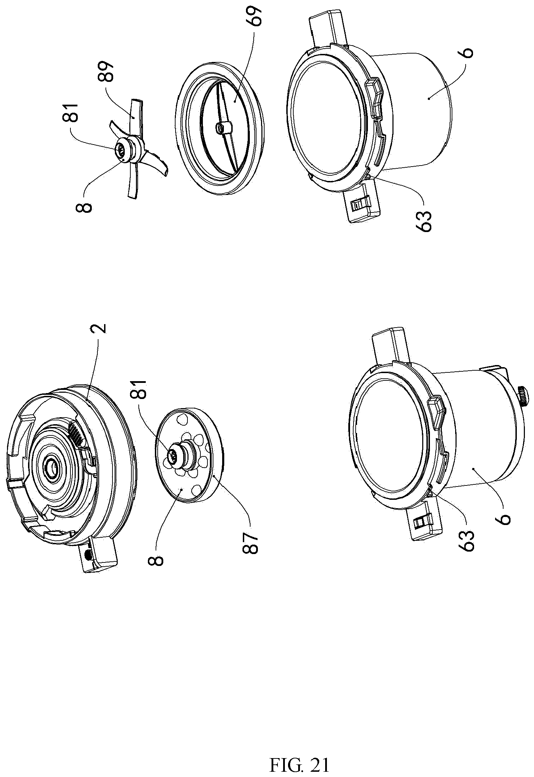

FIG. 21 is a three-dimensional exploded and schematic diagram of the container assembly (1) in Embodiment II of the present utility model; the cup body (6) on the left side, the external cup cover (69) and the processing knife (8) are used to cooperate with the ice shaving device (68) to make ice shaving; the cup body (6) on the right side, the external cup cover (69) and the processing knife (8) are used to stir and make ice cream; the connected body (63) and the safety lifting body (64) of the cup body (6) on the left side is the same as those on the left side; therefore, the cover assembly (2) can be shared.

### DETAILED EMBODIMENTS

The specific embodiments of the present utility model will be described below in combination with the accompanying drawings in the specification.

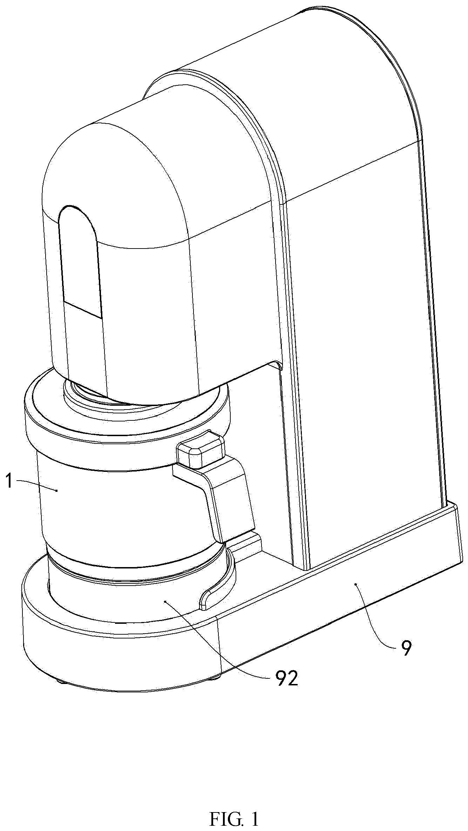

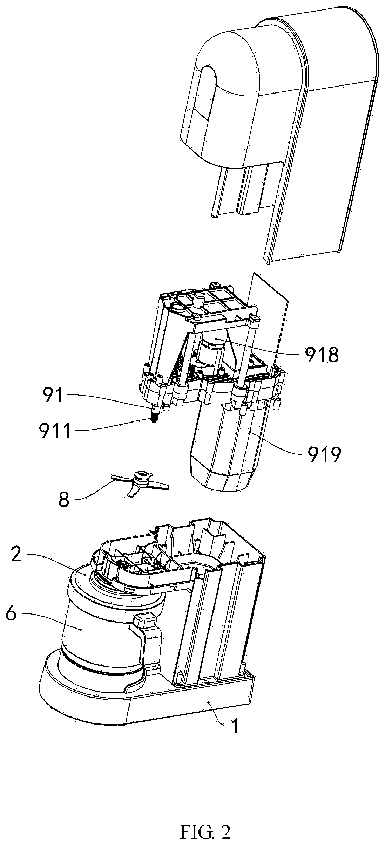

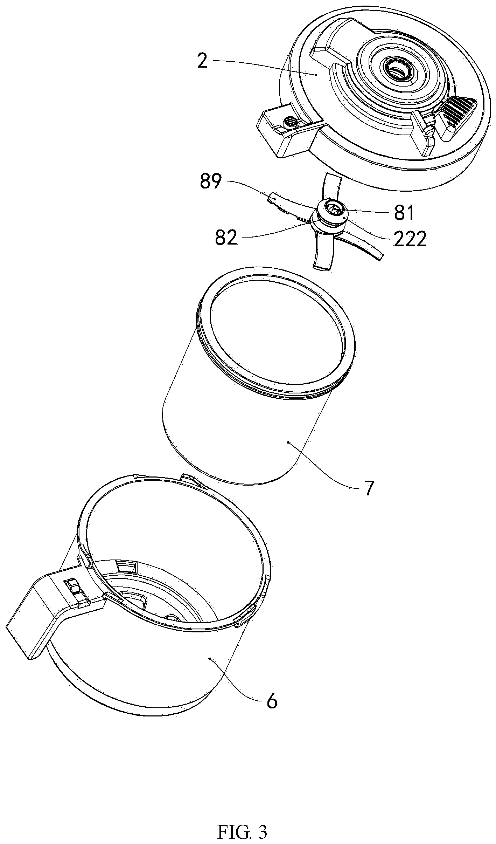

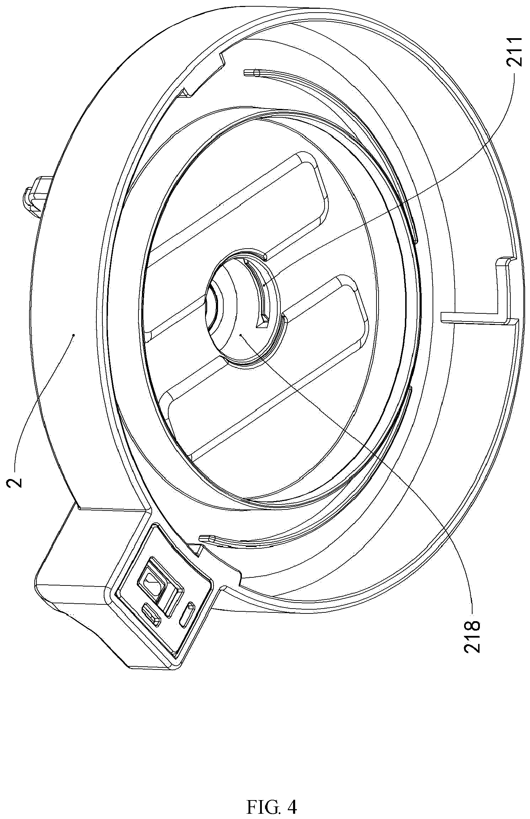

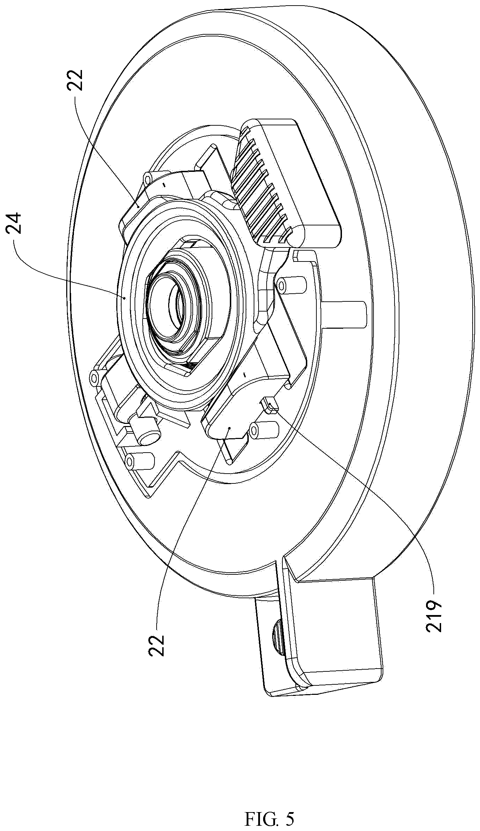

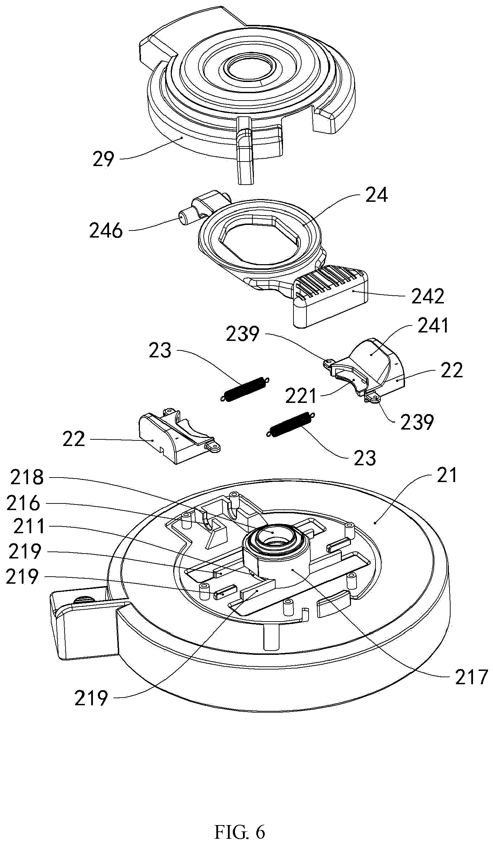

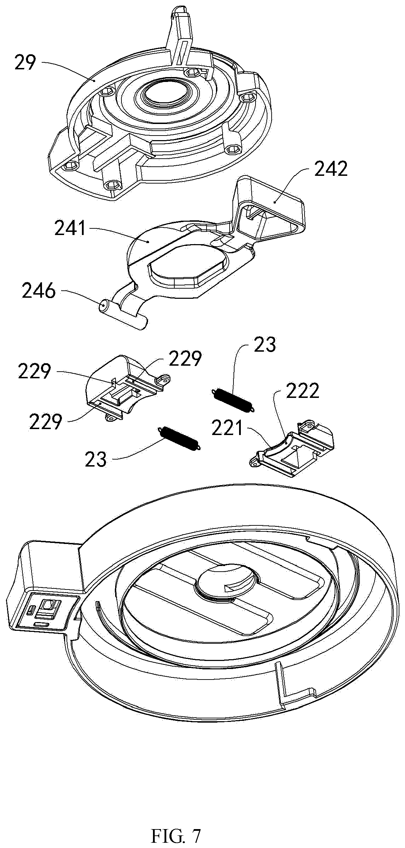

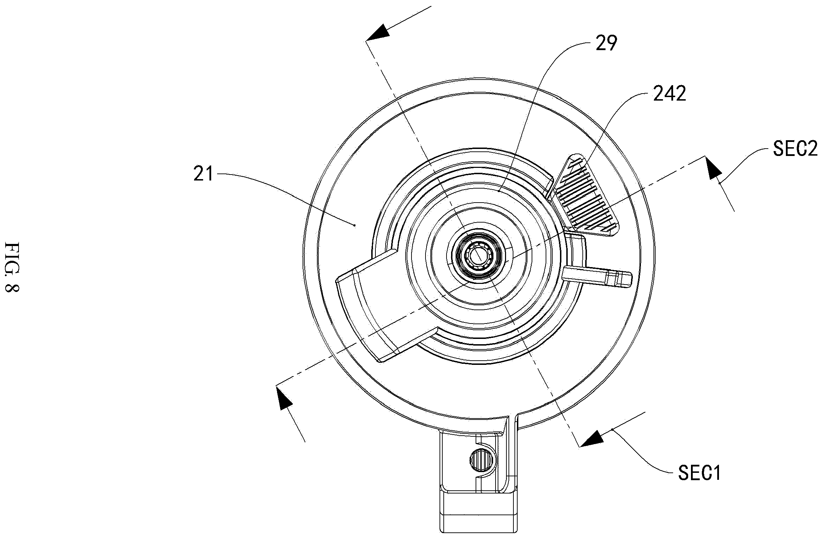

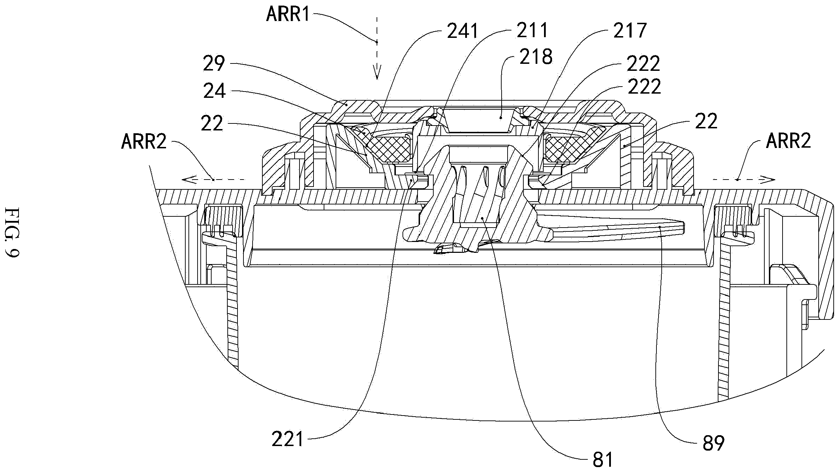

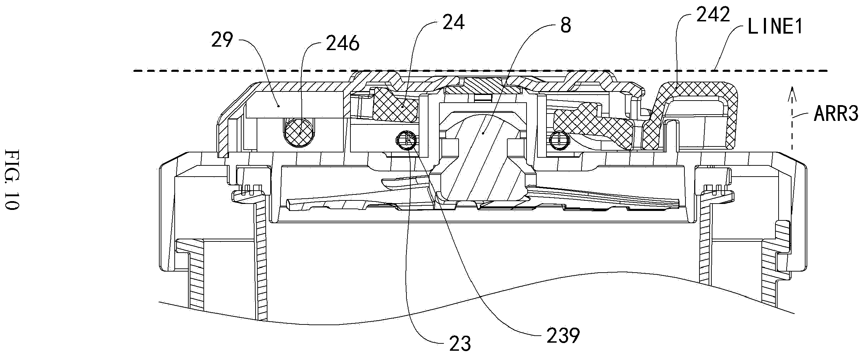

Embodiment I: As shown from FIG. 1 to FIG. 10, the container of a food processing apparatus comprises a container assembly (1), wherein the container assembly (1) comprises a cover assembly (2) and a cup body (6) connected with the cover assembly (2). The cover assembly (2) and the cup body (6) form a holding cavity (not shown in the accompanying drawings) that can be used to hold food and other substances. As one of the specific embodiments, the top opening of the cup body (6) is covered by the cover assembly (2) so that the cover assembly (2) and the cup body (6) form a holding cavity (not shown in the accompanying drawings) that can be used to hold food and other substances. Certainly, the cup body (6) can also be a sheet and covers the bottom opening of the cover assembly (2) so that the cover assembly (2) and the cup body (2) form a holding cavity (not shown in the accompanying drawings) that can be used to hold food and other substances.

As one of the specific embodiments, inside the holding cavity is arranged with an internal container (7) detachably connected with the cup body (6) wherein the top of the internal container (7) abuts the cover assembly (2). The food such as ice cream is placed inside the internal container (7) for processing.

The cover assembly (2) comprises a cover body (21), a plurality of holding pieces (22) and an operating piece (24).

The cover body (21) is arranged with a stirring shaft opening (218) that passes through the cover body (21).

The holding pieces (22) are connected with the cover body (21) in a linearly sliding manner and have a tendency to approach the stirring shaft opening (218) on the horizontal plane.

For example, the cover body (21) is arranged with a plurality of guide rails (219), wherein the holding pieces (22) are arranged with a plurality of guide grooves (229) and the guide rails (219) are embedded into the guide grooves (229) to realize the linearly sliding connection of the holding pieces (22) with the cover body (21).

A holding piece (22) comprises a holding part (221) which can be inserted into the stirring shaft opening (218).

As one of the specific embodiments, the cover assembly (2) also comprises a plurality of resilient pieces (23), and there is a plurality of holding pieces (22) which are arranged around the stirring shaft opening (218), and the resilient pieces (23) are respectively connected with different holding pieces (22) so that the holding pieces have a tendency to approach each other and thus have a tendency to approach the stirring shaft opening (218) and thus can ensure that the holding forces of the holding pieces (22) on the holding groove (82) of the after-mentioned processing knife (8) are equal; the holding pieces are evenly arranged around the stirring shaft opening (218) so that the holding parts can stably clamp the processing knife (8). The resilient pieces (23) are springs, the holding pieces (22) are arranged with connecting lugs (239), and the resilient pieces (23) are connected with the connecting lugs (239).

The operating piece (24) is movably connected with the cover body (21), and the movability of the operating piece (24) relative to the cover body (21) has a vector along the stirring shaft opening (218). For example, the operating piece (24) is connected with the cover body (21) in a linearly sliding manner along the stirring shaft opening (218).

At least one kind of the holding pieces (22) and the operating piece (24) is arranged with a supporting slope (241) so that the operating piece (24) can abut the abutting bevel of the holding pieces (22), or the abutting bevel (241) of the operating piece (24) can abut the holding pieces (22), or the abutting bevel (241) of the operating piece (24) can abut the abutting bevels (241) of the holding pieces (22) to keep the holding pieces (22) away from the stirring shaft opening (218).

The operating piece (24) can abut the holding pieces (22) to keep the holding pieces (22) away from the stirring shaft opening (218).

The working principle is to mount the container assembly (1) onto the lifting platform (92) of the host (9) before the use. The lifting platform (92) of the host (9) can lift and thus drive the cup body (6) and the cover assembly (2) to lift. The structure of realizing the lifting of the lifting platform (92) is a conventional structure in the prior art, and for example, it realizes the lifting of the lifting platform (90) via an electric cylinder.

The processing knife (8) is arranged with an annular holding groove (82), and at least one holding part (221) is inserted into the holding groove (82) so that the processing knife (8) can be held onto the cover assembly (2).

It should be noted that the host (9) has a stirring shaft (91) with a rotating force, and the stirring shaft (91) can also go up and down. The stirring shaft (91) can pass through the stirring shaft opening (218) and be connected with the connecting part (81) of the processing knife (8).

When or after the stirring shaft (91) is connected with the connecting part (81) of the processing knife (8), the operator makes the operating piece (24) move; for example, the operator presses the operating piece (24) by hand to make the holding pieces (22) far away from the stirring shaft opening (218) till the holding part (221) pulls out the holding groove (82), and the processing knife (8) is released. At the moment, the processing knife (8) can rotate and go up and down as the stirring shaft (91) moves for food processing.

It can be seen from the above that the present utility model can realize the release of the processing knife (8) by pressing the operating piece (24), which is safe and convenient to move the operating piece (24).

As one of the specific embodiments, the operating piece (24) comprises an operating part (242), and in natural state, the operating part (242) is provided with the highest point of the cover assembly (2). The lifting platform (92) drives the cover assembly (2) of container assembly (1) to go up till the operating part (242) abuts the host (9); it is convenient to realize the release of the processing knife (8) without manual operation of the operating piece (24).

As one of the specific embodiments, the operating piece (24) comprises a connecting shaft (246) hinged with the cover body (21), and the part of the operating piece (24) that butts the holding pieces (22) is located between the connecting shaft (246) and the operating part (242). When the operating part (242) is butted by the host (9), the operating piece (24) can provide a great force to hold the holding pieces (22) to ensure smooth movement of the holding pieces (22) and high reliability.

As one of the specific embodiments, the holding part (221) is arranged with a knife bevel (222). When the processing knife (8) is mounted onto the cover assembly (2), it is not necessary to push the holding pieces (22) aside; it is only necessary to make the processing knife (8) abut the knife bevel (222) to move the holding pieces (22) till the holding part (221) is inserted into the holding groove (82); it is convenient to mount the processing knife (8) onto the cover assembly (2).

As one of the specific embodiments, there are two holding pieces (22) which are symmetrical with respect to the operating piece (24).

As one of the specific embodiments, the cover body (21) is arranged with a protrusion (217), and the stirring shaft opening (218) passes through the protrusion (217), the holding pieces (22) abut the protrusion (217), the side wall of the protrusion (217) is arranged with a yielding opening (211), and the holding part can pass through the yielding opening (211). It can limit the distance among the holding pieces (22) and is convenient for mounting the processing knife (8) onto the cover assembly (2).

As one of the specific embodiments, it also comprises a hood (29) that covers the holding pieces (22).

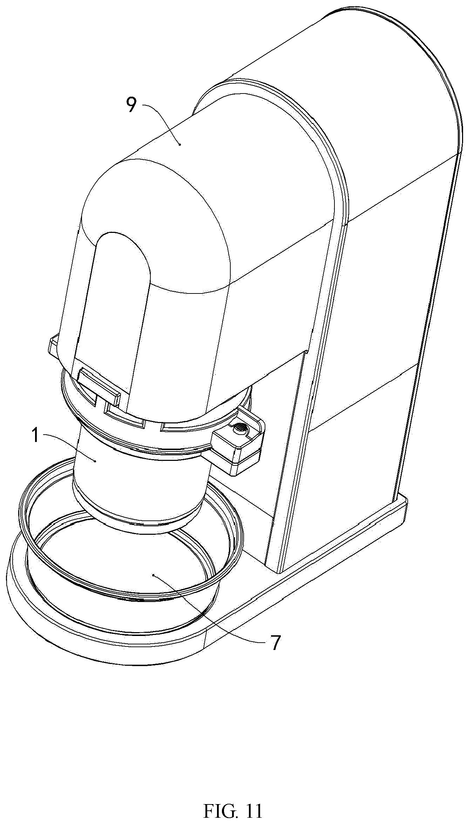

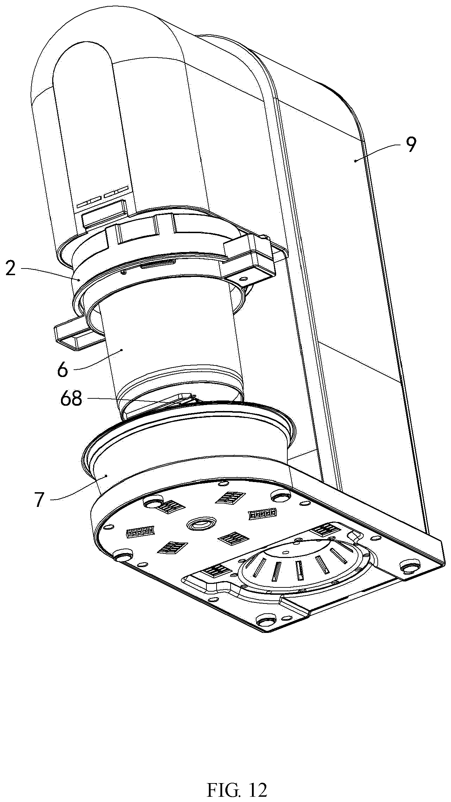

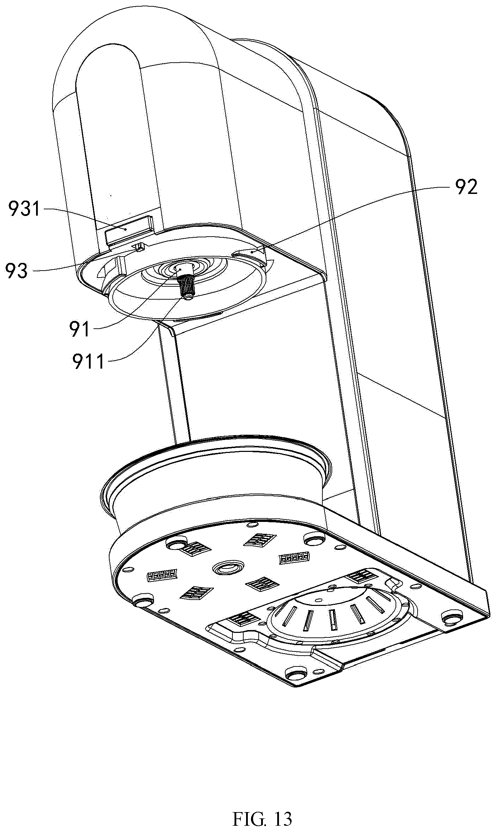

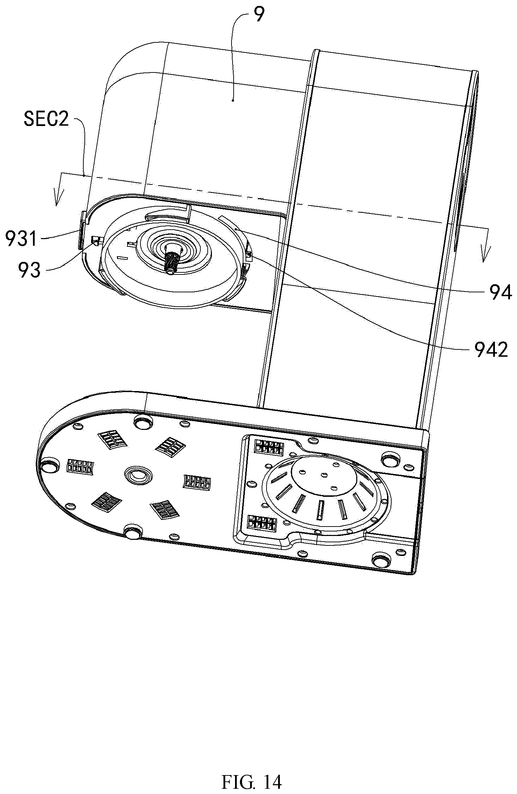

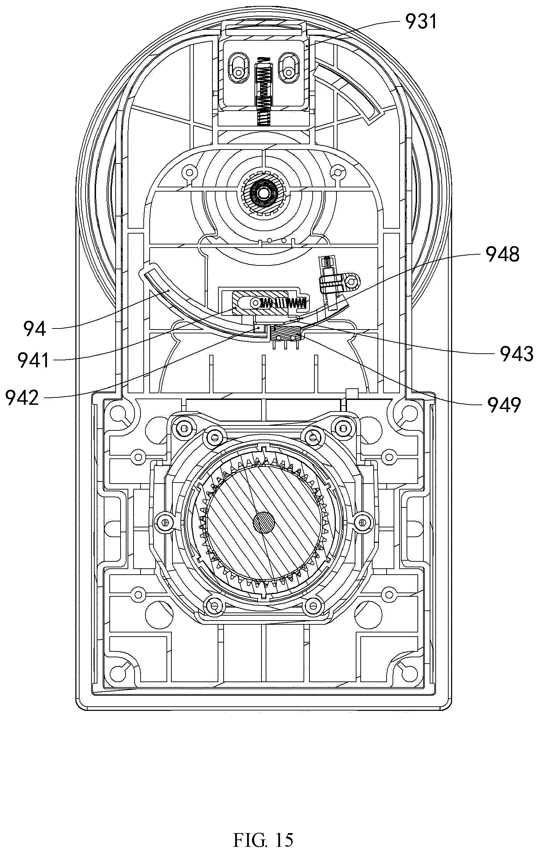

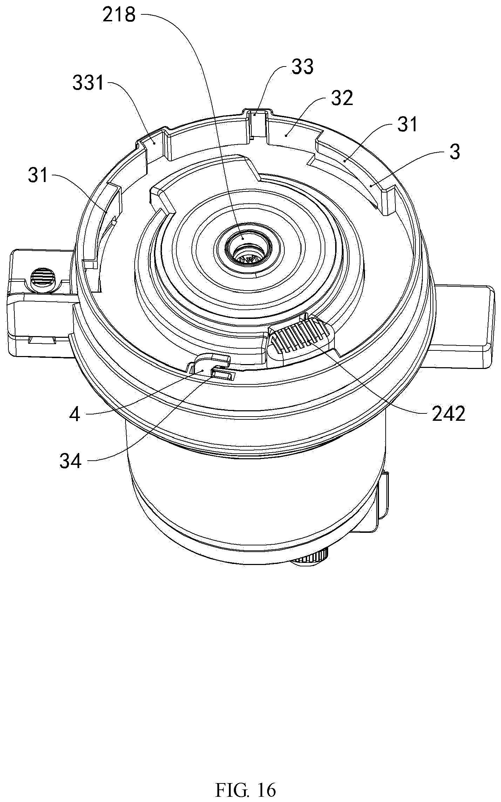

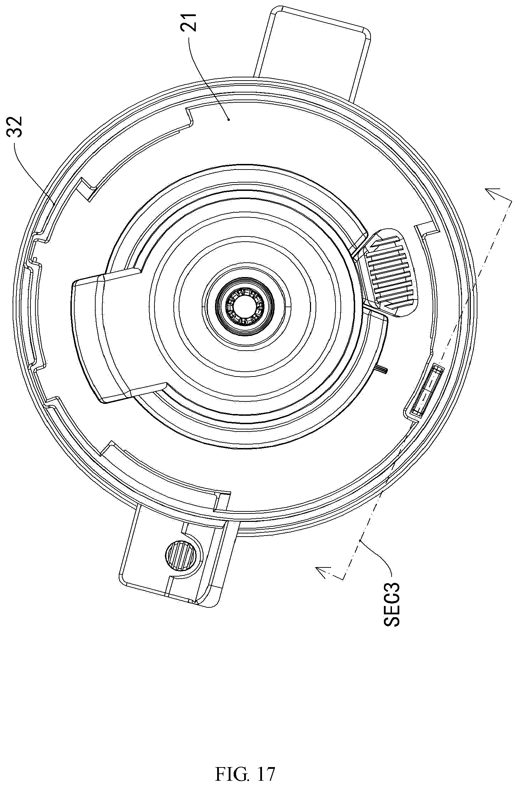

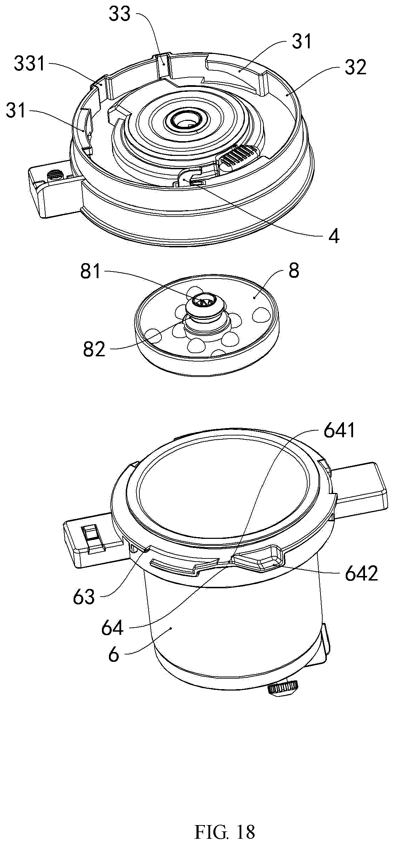

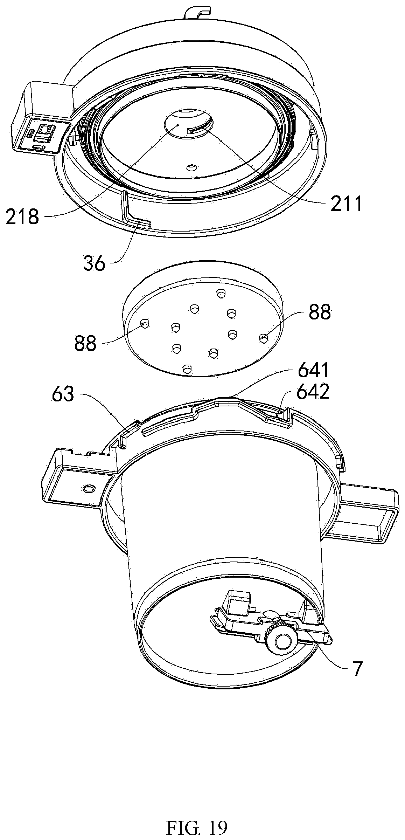

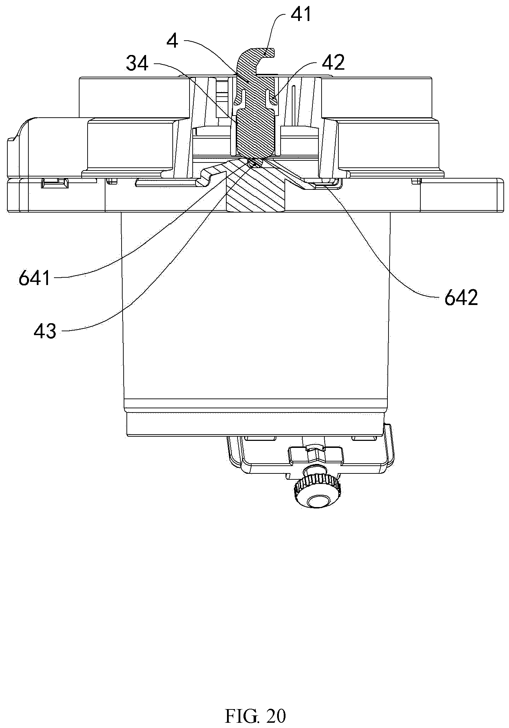

Embodiment II: As shown from FIG. 11 to FIG. 21, the container of a food processing apparatus comprises a container assembly (1), wherein the container assembly (1) comprises a cover assembly (2) and a cup body (6), wherein the cover assembly (2) comprises a plurality of holding pieces (22) and a cover body (21) arranged with a stirring shaft opening (218); the holding pieces (22) are connected with the cover body (21) and can hold the processing knife (8). The technical means for the cover assembly (2) to hold the processing knife (8) are as described in the prior art such as CN2022203185974, and will not be repeated here.

The top of the cover body (21) is fixedly arranged with an annular extension body (32) coaxial with the stirring shaft opening (218), and the inner wall of the extension body (32) is fixedly arranged with an L-shaped host connection body (31). The ring coaxial with the stirring shaft opening (218) means that, viewed from the top, two ends of the extension body (32) are connected with each other and the inner wall of the extension body (32) is roughly coaxial with the stirring shaft opening (218) and that the internal and external parts of the extension body (32) are separated. The L-shaped host connecting body (31) means that the cross section of the host connecting body (31) intercepted along the plane parallel to the stirring shaft opening (218) is roughly L-shaped.

The bottom of the cover body (21) is fixedly arranged with a cup connecting body (36), and the cup body (6) is arranged with a connected body (63); the cup connecting body (36) and the connected body (63) abut each other to limit their mutual distance along the shaft axis of the stirring shaft opening (218) and make the cover body (21) and the cup body (6) connected detachably. For example, both the cross section of the cup connecting body (36) and the cross section of the connected body (6)3 are roughly L-shaped, and the operator rotates the cover body (21) relatively to the cup body (6) so that the L-shaped and roughly horizontal sections abut each other and thus prevent them from keeping away from each other along the shaft axis of the stirring shaft opening (218) and make the cover body (21) detachably connected with the cup body (6). The cup body (6) with any different function can be conveniently connected with the host (9) through the cover body (21).

As one of the specific embodiments, it also comprises an insurance triggering piece (4) arranged with a triggering top (41), wherein the insurance triggering piece (4) is arranged onto the cover body (21) and the triggering top (41) can protrude from the top of the cover body (21). It is safe to ensure that the stirring shaft (91) can rotate only when the container assembly (1) is mounted onto the host (9). One side of the triggering top (41) is rounded or made into a right angle.

As one of the specific embodiments, the cover body (21) is arranged with a linear chute (34), and the insurance triggering piece (4) is inserted into the linear chute (34) so that the insurance triggering piece (4) is connected with the cover body (21) in a linearly sliding manner and the triggering top (41) can go up and down relatively to the cover body (21). It can ensure that the insurance triggering piece (4) is with the cover body (21) in a linearly sliding manner.

As one of the specific embodiments, the insurance triggering piece (4) is arranged with an anti-falling resilient arm (42) that extends outwards, and the anti-falling resilient arm (42) butts the inner side of the linear chute (34). For example, the anti-falling resilient arm is a plastic piece integrated with the insurance triggering piece (4) so that the anti-falling resilient arm (42) become resilient. The lifting of the insurance triggering piece (4) has a damping effect and thus makes it difficult for the insurance triggering piece (4) to fall off from the cover body (21).

As one of the specific embodiments, the cover body (21) and the cup body (6) are connected rotatablely and detachably, the cover body (21) is arranged with a safety lifting body (64), wherein the safety lifting body (64) comprises a higher section (641) and a lower section (642), and the bottom of the insurance triggering piece (4) [namely the abutting bottom (43)] abuts the higher section (641) when the cover body (21) and the cup body (6) are closed. When the cover body (21) is separated from the cup body (6), the insurance triggering piece (4) can move downwards [e.g., it moves downwards because it is abutted by the host (9) when the host (9) is removed from the container assembly (1) after the container assembly (1) is rotated] to make the triggering top (41) enter the cover body (21); it is convenient that the triggering top (41) does not interfere with the use. when the cover body (21) and the cup body (6) are closed, the bottom of the insurance triggering piece (4) abuts the higher section (641) make the triggering top (41) protrude from the top of the cover body (21) and thus realize the protection function.

As one of the specific embodiments, the extension body (32) is arranged with a locking groove (33) and an unlocking and yielding groove (331).

As one of the specific embodiments, the cup body (6) is arranged with an ice shaving device (68) and/or an external cup cover (69) and other functional pieces to realize different functions. For example, the bottom of the cup body (6) is arranged with an ice shaving device (68) disclosed in the document JP3234657U so that the cup body (6) can be integrated with other parts and components described in the present utility model to realize the ice-shaving function. For example, the cup body (6) is arranged with an external cup cover (69) which is detachable and can cover the mouth of the cup body (6) so that the cup body (6) can act as a sealed container.

The food processing apparatus in the embodiments of the present utility model comprises a processing knife (8) and is arranged with a stirring shaft (91) which can rotate as well as go up and down, wherein the bottom of the stirring shaft (91) is a spiral spline (911), the processing knife (8) is arranged with a holding groove (82) and a connecting part (81) just facing the stirring shaft opening (218). The working principles of the connecting part (81) and the holding groove (82) are in the prior art such as CN2022203185974 and will not be repeated here.

The processing knife (8) is also arranged with a plurality of knife wings (89) or a knife disc (87) with top cones (88); the holding pieces (22) hold the processing knife (8).

The knife wings (89) are used to stir and make ice cream, and the knife disc (87) with top cones (88) is used to abut and drive the ice block to rotate as well as cooperate with the ice shaving device (68) for ice shaving. The stirring shaft (91) can rotate as well as go up and down through the prior art, which is not repeated here.

The cover assembly (2) also comprises an operating piece (24) for controlling the holding pieces (22). The working principles of the holding pieces (22) and the operating piece (24) are not repeated here.

The host (9) is arranged with an L-shaped cover connecting protrusion (92), the cover body (21) rotates relatively to the host (9) so that the cover body (21) approaches the host (9), and the host (9) abuts the operating piece (24) and further controls the holding pieces (22) to unlock the processing knife (8) when the host connecting body (31) and the cover connecting protrusion (92) abut each other and are connected. The spiral spline (911) is screwed into the connecting part (81) of the processing knife (8) and thus drives the processing knife (8) to rotate as well as go up and down and finally realizes food processing.

As one of the specific embodiments, the extension body (32) is arranged with a locking groove (33) and an unlocking and yielding groove (331); the host (9) is arranged with a locking protrusion (93) and an unlocking button (931) that can lock the protrusion (93) to lift, and the locking protrusion (93) is inserted into the locking groove (33) to prevent the cover body (21) from rotating relatively to the host (9). The unlocking button (931) is arranged on the front side of the host (9); when the unlocking button (931) is pressed, the unlocking button (931) abuts the locking protrusion (93) via the bevel to make the locking protrusion (93) go up and thus protrude from the locking groove (33); at the moment, the cover body (21) can rotate relatively to the host (9) and is removed from the host (9). When the cover body (21) rotates to make the locking protrusion (93) just face the unlocking and yielding groove (331), the extension body (32) will not abut the locking protrusion (93) and thus it is relatively easy to remove the container assembly (1) from the host (9). In other words, the container assembly (1) can be locked and unlocked conveniently.

As one of the specific embodiments, it also comprises an insurance triggering piece (4) arranged with a triggering top (41), wherein the insurance triggering piece (4) is arranged onto the cover body (21), the triggering top (41) can protrude from the top of the cover body (21), the host is arranged with an arc yielding groove (94), the host is arranged with an electrical signal device (949) inside, the cover body (21) rotates relatively to the host (9) so that the host connecting body (31) and the cover connecting protrusion (92) but each other and are connected and then the triggering top (41) triggers the electrical signal device (949) enables the host (9) to operate. It is safe that the host (9) can operate only after the container assembly (1) is mounted in place. For example, inside the host (9) is arranged with a triggered piece (941) which can linearly slide on the horizontal plane, the triggered piece (941) is arranged with a triggered protrusion (942) which just face the arc-shaped yielding groove (94), and the operator inserts the triggering top (41) into the arc-shaped yielding groove (94) and stretch into the host (9) when the cover assembly (2) and the host (9) approach each other; the operator rotates the cover assembly (2) so that the triggering top (41) pushes the triggered protrusion (942) to make the triggered piece (941) move, the pushing part (943) of the triggered piece (941) pushes the triggered sheet (948) of the electrical signal device (949) which acting as a microswitch so that the electrical signal device (949) sends an electrical signal for powering off or on to enable the host (9) to work.

The terms such as "first" and "third" used in the present utility model do not mean any sequence, quantity or importance, merely for differentiation.

The terms such as "one" and "one kind" used in the present utility model do not mean do not mean the quantity limitation but mean the existence of at least one mentioned object.

The terms such as "top", "bottom", "side", "longitudinal", "transverse", "middle", "center", "outer", "inner", "horizontal", "vertical", "left", "right", "upper" and "lower" indicating the directions or positions used in the present utility model mean reflecting the relative positions but not the absolute positions.

The terms such as "general", "overall", "approximate", "similar" used in the present utility model are used to point out the restrictive terms that have characteristics but allow certain deviations. The extent of allowable deviations may vary from specific background; for example, for dimensional deviations, the specific backgrounds on which such allow deviations may depend include, but are not limited to, the national standards for dimensional tolerances.

## Claims

1. A container cover of a food processing apparatus comprises a cover assembly (2), wherein the cover assembly (2) comprises a cover body (21), a plurality of holding pieces (22) and an operating piece (24); the cover body (21) is arranged with a stirring shaft opening (218) through the cover body (21);
which is **characterized in that** the holding pieces (22) are connected with the cover body (21) in a linearly sliding manner and have a tendency to approach the stirring shaft opening (218) on the horizontal plane; a holding piece (22) comprises a holding part (221) which can be inserted into the stirring shaft opening (218); the operating piece (24) is movably connected with the cover body (21), and the movability of the operating piece (24) relative to the cover body (21) has a vector along the stirring shaft opening (218); at least one kind of the holding pieces (22) and the operating piece (24) is arranged with a supporting slope (241) wherein the holding pieces (22) are located on the movable path of the operating piece (24), and the operating piece (24) can abut the holding pieces (22) to keep the holding pieces (22) away from the stirring shaft opening (218).

2. The container cover of a food processing apparatus in accordance with Claim 1, which is **characterized in that** the cover assembly (2) also comprises a plurality of resilient pieces (23), and there is a plurality of holding pieces (22) which are arranged around the stirring shaft opening (218), and the resilient pieces (23) are respectively connected with different holding pieces (22).

3. The container cover of a food processing apparatus in accordance with Claim 1, which is **characterized in that** the operating piece (24) comprises an operating part (242), and in natural state, the operating part (242) is provided with the highest point of the cover assembly (2).

4. The container cover of a food processing apparatus in accordance with Claim 3, which is **characterized in that** the operating piece (24) comprises a connecting shaft (246), and the part of the operating piece (24) that abuts the holding pieces (22) is located between the connecting shaft (246) and the operating part (242).

5. The container cover of a food processing apparatus in accordance with Claim 1, which is **characterized in that** the holding part (221) is arranged with a knife bevel (222).

6. The container cover of a food processing apparatus in accordance with Claim 2, which is **characterized in that** the holding pieces (22) are symmetrical with respect to the operating piece (24).

7. The container cover of a food processing apparatus in accordance with Claim 2, which is **characterized in that** the cover body (21) is arranged with a protrusion (217), and the stirring shaft opening (218) passes through the protrusion (217), the holding pieces (22) abut the protrusion (217), the side wall of the protrusion (217) is arranged with a yielding opening (211), and the holding part can pass through the yielding opening (211).

8. The container cover of a food processing apparatus in accordance with Claim 1, which is **characterized in that** it also comprises a hood that covers the holding pieces (22).

9. The container cover of a food processing apparatus in accordance with Claim 1, which is **characterized in that** the cover body (21) is arranged with a plurality of guide rails (219), wherein the holding pieces are arranged with a plurality of guide grooves (229) and the guide rails (219) are embedded into the guide grooves (229).

10. A container of a food processing apparatus comprises a cover assembly (2) and a cup body (6), wherein the cover assembly (2) comprises a plurality of holding pieces (22) and a cover body arranged with a stirring shaft opening (218); the holding pieces are connected with the cover body (21) and can hold the processing knife (8); which is **characterized in that**:
the top of the cover body (21) is fixedly arranged with an annular extension body (32) coaxial with the stirring shaft opening (218), and the inner wall of the extension body (32) is fixedly arranged with an L-shaped host connection body (31); the bottom of the cover body (21) is fixedly arranged with a cup connecting body (36), and the cup body (6) is arranged with a connected body (63); the cup connecting body (36) and the connected body (63) abut each other to limit their mutual distance along the shaft axis of the stirring shaft opening (218) and make the cover body (21) and the cup body (6) connected detachably.

11. The container of a food processing apparatus in accordance with Claim 10, which is **characterized in that** it also comprises an insurance triggering piece (4) arranged with a triggering top (41), wherein the insurance triggering piece (4) is arranged onto the cover body (21) and the triggering top (41) can protrude from the top of the cover body (21).

12. The container of a food processing apparatus in accordance with Claim 10, which is **characterized in that** the cover body (21) is arranged with a linear chute (34), and the insurance triggering piece (4) is inserted into the linear chute (34) so that the insurance triggering piece (4) is connected with the cover body (21) in a linearly sliding manner and the triggering top (41) can go up and down relatively to the cover body (21).

13. The container of a food processing apparatus in accordance with Claim 10, which is **characterized in that** the insurance triggering piece (4) is arranged with an anti-falling resilient arm (42) that extends outwards, and the anti-falling resilient arm (42) abuts the inner side of the linear chute (34).

14. The container of a food processing apparatus in accordance with Claim 10, which is **characterized in that** the cover body (21) and the cup body (6) are connected rotatablely and detachably, the cover body (21) is arranged with a safety lifting body (64), wherein the safety lifting body (64) comprises a higher section (641) and a lower section (642), and the bottom of the insurance triggering piece (4) abuts the higher section (641) when the cover body (21) and the cup body (6) are closed.

15. The container of a food processing apparatus in accordance with Claim 10, which is **characterized in that** the extension body (32) is arranged with a locking groove (33) and an unlocking and yielding groove (331).

16. The container of a food processing apparatus in accordance with Claim 10, which is **characterized in that** the cup body (6) is arranged with an ice shaving device (68) and/or an external cup cover (69).

17. A food processing apparatus comprises a container in accordance with any of Claims 10~15, which is **characterized in that** it also comprises a processing knife (8) and is arranged with a stirring shaft (91) which can rotate, wherein the holding pieces (22) hold the processing knife (8); the cover assembly (2) also comprises an operating piece (24) for controlling the holding pieces (22); the host (9) is arranged with a cover connecting protrusion (92), the cover body (21) rotates relatively to the host (9) so that the host (9) butts the operating piece (24) and further controls the holding pieces (22) to unlock the processing knife (8) when the host connecting body (31) and the cover connecting protrusion (92) abut each other and are connected.

18. The food processing apparatus in accordance with Claim 17, which is **characterized in that** the bottom of the said stirring shaft (91) is a spiral spline (911), the processing knife (8) is arranged with a holding groove (82) and a connecting part (81) just facing the stirring shaft opening (218); the spiral spline (911) is screwed into the connecting part (81) of the processing knife (8) and thus drives the processing knife (8) to rotate.

19. The food processing apparatus in accordance with Claim 17, which is **characterized in that** the said processing knife (8) is also arranged with a plurality of knife wings (89) or a knife disc (87) with top cones (88).

20. The food processing apparatus in accordance with Claim 17, which is **characterized in that** the said host (9) is arranged with an L-shaped cover connecting protrusion (92), the cover body (21) is rotated relatively to the host (9) so that the cover body (21) approaches the host (9), and the host (9) abuts the operating piece (24) and further controls the holding pieces (22) to unlock the processing knife (8) when the host connecting body (31) and the cover connecting protrusion (92) abut each other and are connected.

21. The food processing apparatus in accordance with Claim 17, which is **characterized in that** it also comprises an extension body (32) which is arranged with a locking groove (33) and an unlocking and yielding groove (331); the host (9) is arranged with a locking protrusion (93) and an unlocking button (931) that can lock the protrusion (93) to go up and down, and the locking protrusion (93) is inserted into the locking groove (33) to prevent the cover body (21) from rotating relatively to the host (9).

22. The food processing apparatus in accordance with Claim 21, which is **characterized in that** it also comprises an insurance triggering piece (4) arranged with a triggering top (41), wherein the insurance triggering piece (4) is arranged onto the cover body (21), the triggering top (41) can protrude from the top of the cover body (21), the host is arranged with an arc yielding groove (94), inside the host is arranged with an electrical signal device (949), the cover body (21) rotates relatively to the host (9) so that the triggering top (41) triggers the electrical signal device (949) and thus enables the host (9) to operate after the host connecting body (31) and the cover connecting protrusion (92) abut each other and are connected.

23. The food processing apparatus in accordance with Claim 22, which is **characterized in that** inside the host (9) is arranged with a triggered piece (941) which can linearly slide on the horizontal plane, the triggered piece (941) is arranged with a triggered protrusion (942) which just face the arc-shaped yielding groove (94), and the triggering top (41) is inserted into the arc-shaped yielding groove (94) and stretched into the host (9) when the cover assembly (2) and the host (9) approach each other; the operator rotates the cover assembly (2) so that the triggering top (41) pushes the triggered protrusion (942) to make the triggered piece (941) move, the pushing part (943) of the triggered piece (941) pushes the triggered sheet (948) of the electrical signal device (949) which acting as a microswitch so that the electrical signal device (949) sends an electrical signal for powering off or on to enable the host (9) to work.
